# EUROPEAN PATENT APPLICATION

(11) **EP 4 458 901 A1**
(43) Date of publication of application: **06.11.2024**
(21) Application number: 22934585.5
(22) Date of filing: 30.06.2022
(51) Int. Cl.: C08L 63/00, C08G 59/00, C08L 71/00, C08K 7/00

(54) **DEGRADABLE COMPOSITE MATERIAL, FAN BLADE, AND METHOD FOR PREPARING SAME**

(30) Priority: 29.03.2022 CN 202210318383
(71) Applicant: Swancor Advanced Materials Co., Ltd., 201600 Shanghai (CN)
(72) Inventor: WANG, Mengwei, Shanghai 201600 (CN); HUANG, Hansheng, Shanghai 201600 (CN); CHEN, Chunan, Shanghai 201600 (CN); YANG, Shihtse, Shanghai 201600 (CN)
(74) Representative: Herrero & Asociados, S.L.
(86) International application number: PCT/CN2022/102577
(87) International publication number: WO 2023/184762

(57) **Abstract**

The present disclosure discloses a degradable composite, a wind turbine blade, and a manufacturing method of the wind turbine blade. The degradable composite of the present disclosure includes 30% to 40% of a degradable epoxy resin composition, 45% to 55% of a fiber raw material, 0% to 20% of a core material, and 0% to 10% of an epoxy structural adhesive in mass percentages. The degradable epoxy resin composition includes a degradable modified resin. In the present disclosure, a degradable epoxy resin is adopted as a structural layer to manufacture a wind turbine blade that has excellent mechanical properties and conforms to the requirements of blade designs and the environment, health, and safety (EHS) standards in the industry. Since the present disclosure adopts a degradable epoxy resin as a structural layer and the degradable epoxy resin does not change the existing process parameters, it does not require the additional adaptation of a user during use. Because the degradable epoxy resin is used instead of the existing epoxy resin, the composite component manufactured accordingly can be degraded and separated under appropriate conditions to recover a resin liquid and a fiber raw material, and the recovered resin liquid and fiber raw material can be recycled, which allows an eco-friendly circular economy.

## Description

### TECHNICAL FIELD

The present disclosure relates to a degradable composite, a wind turbine blade, and a manufacturing method of the wind turbine blade, and belongs to the technical field of wind turbine blades.

### BACKGROUND

With current developments and the rise of environmental awareness, the power generation industry continues to develop from the earliest thermal power generation and nuclear energy power generation to renewable energy power generation, and wind power generation plays an important role in renewable energy power generation. Wind turbine blades, as an important component for wind power generation, include mainstream blade profiles that are 50 m to 60 m or even 100 m long. The treatment of scrapped wind turbine blades faces severe environmental issues. Currently, there are two mainstream treatment methods for scrapped wind turbine blades: scrapped wind turbine blades are chopped and then directly burned at a high temperature, or scrapped wind turbine blades are chopped and then discarded. Both of the above two methods are very harmful to the ecological environment.

Therefore, the development of a degradable and recyclable composite blade can greatly improve this problem. After the composite blade is scrapped, a cured resin can be degraded in an appropriate way and thus separated from auxiliary raw materials, a separated resin can be reused in a formula, and a fiber raw material can also be refinished and then reused, which allows a carbon neutrality benefit and minimizes the environmental harm.

### SUMMARY

The technical problem to be solved by the present disclosure: After the existing wind turbine blades are scrapped, the scrapped wind turbine blades need to be chopped and then directly burned at a high temperature or need to be chopped and then discarded, can hardly be recycled, and cause an impact to the environment.

In order to solve the above technical problem, the present disclosure provides a degradable composite, including the following components in mass percentages:
a degradable epoxy resin composition: 30% to 40%;
a fiber raw material: 45% to 55%;
a core material: 0% to 20%; and
an epoxy structural adhesive: 0% to 10%;
where the degradable epoxy resin composition includes a degradable modified resin shown in formula (I): 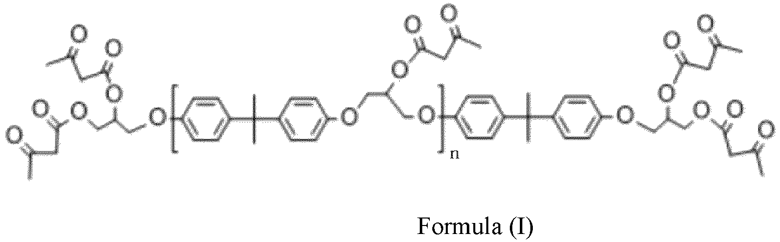
n in the formula (I) is a natural number.

Preferably, the degradable epoxy resin composition includes 60% to 80% of an epoxy resin composition and 20% to 40% of an amine curing agent in mass percentages; the epoxy resin composition includes 90% to 97.5% of an epoxy resin and 2.5% to 10% of the degradable modified resin shown in the formula (I) in mass percentages; and the degradable epoxy resin composition has a characteristic peak at 1,760 cm⁻¹ to 1,710 cm⁻¹ in infrared spectroscopy analysis.

Preferably, the fiber raw material is selected from any one of a glass fiber and a carbon fiber.

Preferably, the core material is selected from any one or a mixture of two or more of a polyvinyl chloride (PVC) foam core material, a polyethylene terephthalate (PET) foam core material, and a Balsa core material.

Preferably, the degradable composite is allowed to undergo thermal degradation with an amine compound in an alkaline environment to separate fibers.

Preferably, the thermal degradation is conducted at 60°C to 180°C for 1 h to 48 h.

The present disclosure also provides a use of the degradable composite described above in a wind turbine blade, including a use of the degradable composite in prefabs of a main spar, a web, a trailing edge beam, and a blade root.

The present disclosure also provides a degradable wind turbine blade, where a raw material for manufacturing the degradable wind turbine blade includes the degradable composite described above.

The present disclosure also provides a manufacturing method of the degradable wind turbine blade described above, including the following steps:
step 1: putting the fiber raw material in a blade shell mold, putting prefabs of a main spar, a trailing edge beam, and a blade root in the blade shell mold, and arranging the core material to obtain a laminated structure;
step 2: introducing consumables required for a vacuum infusion process, turning on a vacuum pump to extract air in the laminated structure, infusing the degradable epoxy resin composition into the laminated structure immediately after an absolute vacuum is reached to allow the laminated structure to be fully wetted and impregnated by the degradable epoxy resin composition, and conducting thermal curing to obtain a half of a blade; and
step 3: bonding two halves of the blade with a web by using the epoxy structural adhesive to produce a composite wind turbine blade.

Preferably, in the step 2, vacuuming is conducted for 20 min to 80 min until a vacuum degree is 20 mbar to 40 mbar; the degradable epoxy resin composition is infused into the laminated structure for 40 min to 120 min; and the thermal curing is conducted at 60°C to 90°C for 4 h to 10 h.

Compared with the prior art, the present disclosure has the following beneficial effects:
(1) In the present disclosure, a degradable epoxy resin is adopted as a structural layer to manufacture a wind turbine blade that has excellent mechanical properties and conforms to the requirements of blade designs and the environment, health, and safety (EHS) standards in the industry.
(2) Since the present disclosure adopts a degradable epoxy resin as a structural layer and the degradable epoxy resin does not change the existing process parameters, it does not require the additional adaptation of a user during use.
(3) Because the degradable epoxy resin is used instead of the existing epoxy resin, the composite component manufactured accordingly can be degraded and separated under appropriate conditions to recover a resin liquid and a fiber raw material, and the recovered resin liquid and fiber raw material can be recycled, which allows an eco-friendly circular economy.

### BRIEF DESCRIPTION OF THE DRAWINGS

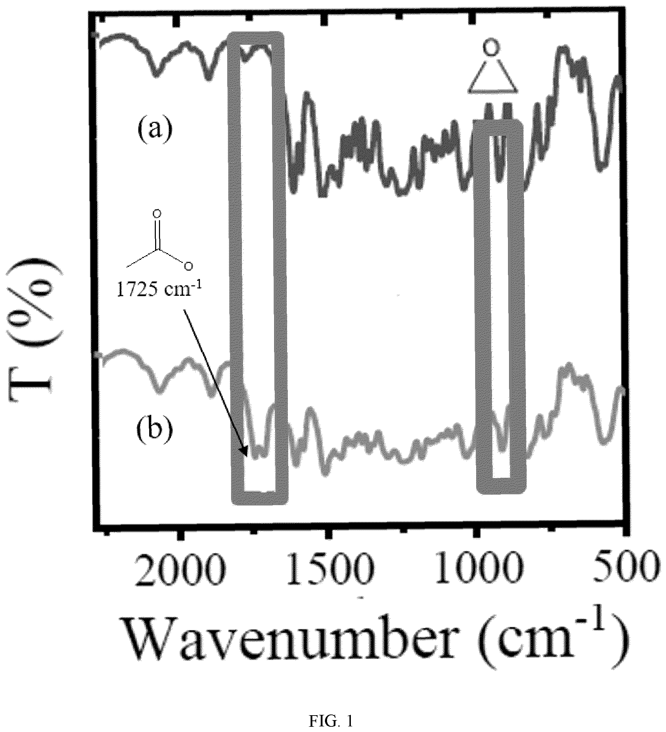

FIG. 1 shows infrared analysis results of the degradable epoxy resin composition, where (a) is for an epoxy resin without a degradable component and (b) is for the degradable epoxy resin composition.

### DETAILED DESCRIPTION OF THE EMBODIMENTS

In order to make the present disclosure more understandable, preferred examples are provided to describe the present disclosure in detail below with reference to the accompanying drawing.

In the following examples, the degradable modified resin used has a structure shown in formula (I):

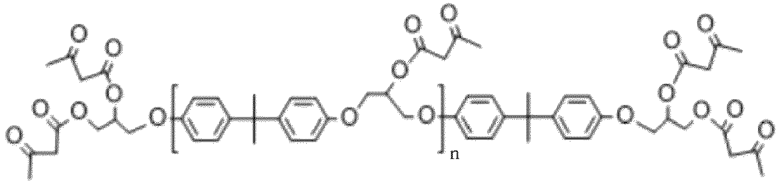

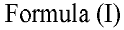

### Examples 1 to 2 and Comparative Examples 1 to 2

The formulas of the degradable epoxy resin compositions in Examples 1 to 2 and Comparative Examples 1 to 2 each were subjected to preliminary evaluation. Mass percentages of corresponding components in each formula are shown in Table 1. The formulas of the degradable epoxy resin compositions each have a characteristic peak of carbonyl at 1,725 cm⁻¹ in infrared analysis, as shown in FIG. 1. Corresponding components in each formula were mixed, cured at 70°C for 6 h, evaluated for a glass transition temperature (Tg) by a differential scanning calorimeter (DSC), and simply and preliminarily evaluated for degradability with an amine compound in an alkaline environment.

**Table 1 Preliminary evaluation of the formulas of the degradable resin compositions**

| | Example 1 | Example 2 | Comparative Example 1 | Comparative Example 2 |
|---|---|---|---|---|
| Epoxy resin BE188 | 95.8 | 97.5 | 98 | 89 |
| Degradable modified resin: formula (I) | 4.2 | 2.5 | 2 | 11 |
| Jeffamine D230 | 30 | 30 | 30 | 30 |
| Glass transition temperature (Tg) (unit: °C; standard: > 76°C) | 76.73 | 78.05 | 78.23 | 70.47 |
| Degradability | ○ | ○ | × | ○ |

It can be seen from the above preliminary evaluation that, when a content of the degradable modified resin is too high, the overall physical properties of a cured product are reduced to be lower than the standard (Comparative Example 2), and when the content of the degradable modified resin is too low, it will lead to poor degradability (Comparative Example 1). Therefore, in the subsequent examples, the blade-making evaluation would be conducted with the formula of the degradable epoxy resin composition in Example 2.

### Example 3

A degradable wind turbine blade was manufactured from the raw materials in mass percentages shown in Table 2 according to the following steps:
(1) The fiber raw material was put in a blade shell mold, then prefabs of a main spar, a trailing edge beam, and a blade root were put in the blade shell mold, and the core material was arranged to obtain a laminated structure.
(2) Consumables required for a vacuum infusion process were introduced, a vacuum pump was turned on to extract air in the laminated structure, the degradable epoxy resin composition was infused into the laminated structure for 105 min immediately after an absolute vacuum was reached to allow the laminated structure to be fully wetted and impregnated by the degradable epoxy resin composition, and thermal curing was conducted at 80°C for 6 h to obtain a half of a blade, where vacuuming was conducted for 65 min until a vacuum degree was 30 mbar.
(3) Two halves of the blade were bonded with a web by using the epoxy structural adhesive to produce a composite wind turbine blade.

Notes: In the above steps, the fiber raw material is a glass fiber; the core material is a mixture of a PVC foam core material and a Balsa core material; and the composite wind turbine blade produced is a 68.8 m blade profile.

### Example 4

A degradable wind turbine blade was manufactured according to a raw material formula shown in Table 2. This example was different from Example 3 in that in the step (2), the vacuuming was conducted for 30 min until a vacuum degree was 25 mbar, the degradable epoxy resin composition was infused for 60 min, and the thermal curing was conducted at 70°C.

### Example 5

A degradable wind turbine blade was manufactured according to a raw material formula shown in Table 2. This example was different from Example 3 in that in the step (2), the vacuuming was conducted for 80 min until a vacuum degree was 20 mbar, the degradable epoxy resin composition was infused for 100 min, and the thermal curing was conducted at 70°C for 10 h.

### Examples 6 and 7

A degradable wind turbine blade was manufactured with a different formula from Example 3. Corresponding components in the formula of this example and mass percentages thereof are shown in Table 2.

**Table 2 Components and mass percentages thereof in Examples 3 to 7**

| Component | Raw material source (manufacturer and grade) | Example 3 | Example 4 | Example 5 | Example 6 | Example 7 |
|---|---|---|---|---|---|---|
| Degradable epoxy resin composition | Example 2 | 35 | 35 | 35 | 30 | 40 |
| Glass fiber | Taishan Fiberglass Inc., SUD1240 | 50 | 50 | 50 | 45 | 55 |
| PVC foam core material | Diab New Materials Co., Ltd., H45 | 3 | 5 | 5 | 10 | 0 |
| Balsa core material | PNG Balsa, BALTEK | 7 | 0 | 5 | 10 | 2.5 |
| Epoxy structural adhesive | Swancor Advanced Materials Co., Ltd., SWANCOR 2532 | 5 | 10 | 5 | 5 | 2.5 |

### Example 8

A degradable wind turbine blade was manufactured. This example was different from Example 3 in that the fiber raw material in the formula was changed from the glass fiber to a carbon fiber, and the carbon fiber was purchased from American ZOLTEK 50K (zoltex 50k).

### Comparative Example 3

A wind turbine blade was manufactured. This example was different from Example 3 in that the degradable modified resin in the above step was replaced by a general epoxy resin at an equal mass.

### Performance test

Test samples: The degradable wind turbine blades obtained in Examples 3 to 8 were taken and numbered as test samples 1 to 6, respectively, and the composite wind turbine blade obtained in Comparative Example 3 was taken as a control sample 1.

Evaluation method: Each test sample was weighed, cut to an appropriate size, and subjected to a resin degradation treatment to obtain a recovered liquid and a recovered solid (including the fiberBalsa/core material). A total weight of the recovered solid was measured, and a solid recovery ratio was calculated according to the following calculation formula: solid recovery ratio = (original weight of a blade - a weight of a recovered solid)/original weight of the blade. A theoretical solid proportion was compared with an actual recovered solid proportion to obtain a separation rate: separation rate (%) = 1 - ((actual recovered solid proportion - theoretical composite proportion)/theoretical resin proportion)) * 100%.

Analysis results are shown in Table 3.

| Sample | Theoretical composite proportion (%) | Actual recovered solid proportion (%) | Separation rate |
|---|---|---|---|
| Test sample 1 | 65 | 70 | 86 |
| Test sample 2 | 65 | 73 | 77 |
| Test sample 3 | 65 | 75 | 71 |
| Test sample 4 | 70 | 78 | 73 |
| Test sample 5 | 60 | 66 | 85 |
| Test sample 6 | 65 | 70 | 86 |
| Control sample 1 | 65 | 100 | 0 |

It can be seen from Example 3, Comparative Example 3, and Table 3 that a wind turbine blade manufactured using the degradable modified resin instead of the mainstream epoxy resin can have a separation rate of 86%, indicating that most of the degradable modified resin in the wind turbine blade can be recovered through degradation and recycled.

It can be seen from Examples 3 and 4 to 7 and Table 3 that different auxiliary material proportions all can allow effective degradation and separation, with a separation rate at least higher than 70%.

It can be seen from Examples 3 and 8 and Table 3 that, in the carbon fiber composite system, a separation rate can also reach 86%. Because the carbon fiber itself has a high value, such a recovery mechanism has a great economic benefit overall. However, because the carbon fiber itself has a high price, the glass fiber is preferred for upper and lower shells for a wind turbine blade, and a carbon fiber product is only used for individual strengthening parts. As a whole, both the glass fiber and the carbon fiber have a recovery value.

The above examples are preferred examples of the present disclosure rather than limitations on the present disclosure in any form and substance. It should be noted that those of ordinary skill in the art may make various improvements and supplementations without departing from the principles of the present disclosure, and these improvements and supplementations should be regarded as falling within the protection scope of the present disclosure.

## Claims

1. A degradable composite, comprising the following components in mass percentages:
a degradable epoxy resin composition: 30% to 40%;
a fiber raw material: 45% to 55%;
a core material: 0% to 20%; and
an epoxy structural adhesive: 0% to 10%;
wherein the degradable epoxy resin composition comprises a degradable modified resin shown in formula (I): 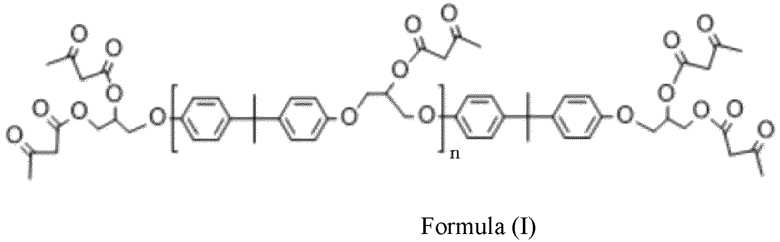
wherein n in the formula (I) is a natural number.

2. The degradable composite according to claim 1, wherein the degradable epoxy resin composition comprises 60% to 80% of an epoxy resin composition and 20% to 40% of an amine curing agent in mass percentages; the epoxy resin composition comprises 90% to 97.5% of an epoxy resin and 2.5% to 10% of the degradable modified resin shown in the formula (I) in mass percentages; and the degradable epoxy resin composition has a characteristic peak at 1,760 cm⁻¹ to 1,710 cm⁻¹ in infrared spectroscopy analysis.

3. The degradable composite according to claim 1, wherein the fiber raw material is selected from any one of a glass fiber and a carbon fiber.

4. The degradable composite according to claim 1, wherein the core material is selected from any one or a mixture of two or more of a polyvinyl chloride (PVC) foam core material, a polyethylene terephthalate (PET) foam core material, and a Balsa core material.

5. The degradable composite according to claim 1, wherein the degradable composite is allowed to undergo thermal degradation with an amine compound in an alkaline environment to separate fibers.

6. The degradable composite according to claim 5, wherein the thermal degradation is conducted at 60°C to 180°C for 1 h to 48 h.

7. A use of the degradable composite according to any one of claims 1 to 6 in a wind turbine blade, comprising a use of the degradable composite in prefabs of a main spar, a web, a trailing edge beam, and a blade root.

8. A degradable wind turbine blade, wherein a raw material for manufacturing the degradable wind turbine blade comprises the degradable composite according to any one of claims 1 to 6.

9. A manufacturing method of the degradable wind turbine blade according to claim 8, comprising the following steps:
step 1: putting the fiber raw material in a blade shell mold, putting prefabs of a main spar, a trailing edge beam, and a blade root in the blade shell mold, and arranging the core material to obtain a laminated structure;
step 2: introducing consumables required for a vacuum infusion process, turning on a vacuum pump to extract air in the laminated structure, infusing the degradable epoxy resin composition into the laminated structure immediately after an absolute vacuum is reached to allow the laminated structure to be fully wetted and impregnated by the degradable epoxy resin composition, and conducting thermal curing to obtain a half of a blade; and
step 3: bonding two halves of the blade with a web by using the epoxy structural adhesive to produce a composite wind turbine blade.

10. The manufacturing method of the degradable wind turbine blade according to claim 9, wherein in the step 2, vacuuming is conducted for 20 min to 80 min until a vacuum degree is 20 mbar to 40 mbar; the degradable epoxy resin composition is infused into the laminated structure for 40 min to 120 min; and the thermal curing is conducted at 60°C to 90°C for 4 h to 10 h.
